# FASCICULE DE BREVET EUROPEEN

(11) **EP 1 618 711 B1**
(45) Date de publication et mention de la délivrance du brevet: **23.07.2008**
(21) Numéro de dépôt: 04760476.4
(22) Date de dépôt: 29.04.2004
(51) Int. Cl.: H04L 12/56

(54) **DISPOSITIF DE COMMUNICATIONS POUR VEHICULE TERRESTRE**
KOMMUNIKATIONSVORRICHTUNG FÜR EIN LANDFAHRZEUG
COMMUNICATION DEVICE FOR A LANDBORNE VEHICLE

(30) Priorité: 30.04.2003 FR 0305382
(43) Date de publication de la demande: 25.01.2006
(73) Titulaire: Orange France, 94745 Arcueil Cedex (FR)
(72) Inventeur: TRIFT, Jérôme, F-75005 PARIS (FR); OTTOGALLI, François-Gaël, F-73190 CHALLES LES EAUX (FR); THORIGNE, Yves, F-14790 VERSON (FR)
(74) Mandataire: de la Fouchardière, Marie-Noelle
(86) Numéro de dépôt international: PCT/FR2004/050176
(87) Numéro de publication internationale: WO 2004/100465

(56) Documents cités:
- EP-A- 1 209 928
- LIND R ET AL: "THE NETWORK VEHICLE - A GLIMPSE INTO THE FUTURE OF MOBILE MULTI-MEDIA" IEEE AEROSPACE AND ELECTRONIC SYSTEMS MAGAZINE, IEEE INC. NEW YORK, US, vol. 14, no. 9, septembre 1999 (1999-09), pages 27-32, XP000941847 ISSN: 0885-8985

## Description

La présente invention concerne un dispositif de communications pour véhicule terrestre. Elle trouve son application dans le domaine des radiocommunications et permet l'usage des services multimédia, normalement accessibles par tout équipement informatique relié à un réseau de télécommunication mobile, et ceci dans le cadre d'un véhicule terrestre comme un véhicule automobile.

Dans le cadre de l'invention, plusieurs personnes prenant place dans un véhicule pourront avoir accès par Internet à différents services de communications. Ces utilisateurs à l'intérieur de la voiture feront usage de leurs terminaux personnels informatiques pour accéder aux services multimédias. Dans un premier mode de réalisation, le mode d'accès est en particulier le mode de téléphonie GSM/GPRS. Dans un second mode de réalisation, le mode d'accès est le mode de téléphonie UMTS ou un autre mode de téléphonie pour les mobiles permettant la mise en oeuvre de l'invention.

Dans le cadre de l'invention, la mise en relation d'un terminal informatique au réseau mobile se fait via un réseau personnel sans fil par exemple selon le protocole Bluetooth^{™} ou encore selon le protocole WiFi^{™}. Le champ d'application est donc celui des données, aussi le mode d'accès est en mode paquets. Cependant, cette invention ne se limite pas aux services de données, car le dispositif de connexion au réseau mobile du réseau local sera aussi susceptible de fournir des services de téléphonie, à la condition toutefois que le service soit basé sur la technique VolP (voix sur IP).

Dans le cadre de l'invention, deux techniques coopèrent pour atteindre les objectifs :
- d'une part, le réseau d'accès (GPRS, UMTS...) qui travaille en mode paquet,
- d'autre part, la technologie de communication courte distance, comme la technologie Bluetooth^{™} par exemple, de sorte que soit possible le raccordement entre eux de plusieurs terminaux et plus particulièrement d'au plus N-1 terminaux reliés à un N-ième terminal qui joue le rôle de dispositif de connexion au réseau mobile du réseau local pour un réseau de N stations locales.

Dans l'état de la technique, la mise en oeuvre d'un réseau local de genre "piconet" comme un réseau local de technologie Bluetooth^{™} associée à un point d'accès à un réseau, qu'il soit fixe ou bien mobile, est décrit dans plusieurs publications, et a donné lieu à des réalisations industrielles.

On peut ainsi mentionner l'existence de produits de type 'point d'accès ("Access Point") permettant l'accès par des terminaux informatiques, équipés de l'interface Bluetooth^{™}, au réseau fixe haut débit de type ADSL.

On peut aussi mentionner l'existence de systèmes permettant la connexion d'un réseau local "piconet" Bluetooth^{™} au réseau mobile par l'intermédiaire d'un téléphone mobile. Ce dernier est alors utilisé comme passerelle entre le réseau mobile et le réseau local "piconet" Bluetooth^{™}.

Plus particulièrement, la société IXI Mobile Inc (Palo Alto - Californie) a développé un système appelé PMG (Personal Mobile Gateway) qui permet le raccordement de plusieurs terminaux informatiques équipés de l'interface de communication courte distance Bluetooth^{™} au réseau GSM/GPRS. Ce système est architecturé autour d'un petit dispositif (le PMG) qui assure les fonctions de connexion au réseau par l'intermédiaire d'un module radio GSM/GPRS. Ce même dispositif est aussi équipé d'un module radio de type Bluetooth^{™}. Le PMG assure en plus des fonctions précédemment citées de connectivité radio GSM/GPRS et de connectivité radio Bluetooth^{™} les fonctions de micro-routeur et de micro-serveur. En particulier, le micro-serveur permet d'assurer les fonctions de paramétrages du pico-réseau ainsi formé par les différents équipements informatiques personnels. Ces fonctions de paramétrages concernent en particulier les équipements pouvant être connectés ainsi que les applications utilisant les capacités du système. Le concept développé par la société IXI s'oppose donc au concept du terminal "tout en un" qui se base sur la possibilité qu'un seul et unique terminal peut fournir la totalité des services dont l'utilisateur a besoin en mobilité.

Dans l'état de la technique, on a aussi présenté l'implémentation dans un véhicule automobile d'un système proposant des services disponibles via un réseau mobile de type UMTS. Le débit binaire disponible sur la liaison mobile est de 128Kbits/s, les services démontrés comprennent la vidéo en direct, le téléchargement de morceaux de musique, la vidéophonie ainsi qu'un système de navigation débarquée (off-board navigation system). Les services de communications offerts peuvent comporter ceux des domaines professionnels (services pour l'entreprise), de la mobilité, des divertissements ainsi que celui de l'information. L'ensemble de ces services bénéficiera du support de la vidéo. Dans cette version expérimentale, le véhicule est équipé d'ordinateurs de type IBM-PC et d'écrans de visualisation disposés dans l'arrière des sièges. Ces équipements ne sont pas reliés via une liaison radio de courte distance, comme par exemple de type Bluetooth^{™}, mais sont connectés par un faisceau de câble entre eux.

La demande de brevet EP-A2-1.209.928 divulgue un système architecturé autour d'un serveur (de préférence de type PC). Ce serveur est installé dans un véhicule, de préférence une voiture ferroviaire. Ce serveur est équipé de deux types d'interface radio, le premier est de préférence de type W-CDMA (UMTS) afin d'accéder à des serveurs distants, le second étant une interface radio de courte distance (de préférence Bluetooth^{™}). Le système est complété par un second serveur de contrôle de services ("*service controller server")* chargé du contrôle d'accès aux ressources du premier serveur. En effet, le système décrit un usage uniquement public où les terminaux, de préférence des téléphones mobiles qui ont accès au premier serveur ou bien aux serveurs distants, appartiennent à un large public.

Par conséquent, ce système n'est pas basé sur l'usage des services multimédia disponibles via le réseau mobile de type paquet (comme le réseau GPRS) à un réseau personnel, mais au contraire cet accès est donné au "public". Pour ce faire, en particulier, le terminal en cours d'utilisation doit effectuer une procédure de sécurité comportant une étape d'identification, puis une étape d'authentification, auprès d'un dispositif appelé "contrôleur d'accès", lors de l'activation de chaque session.

L'analyse de l'état de la technique fait apparaître les inconvénients suivants :
- L'association d'un ensemble d'équipements informatiques personnels formant un réseau personnel et un mode d'accès au réseau mobile de type paquet (GPRS) est décrit, mais ne renseigne pas sur un quelconque usage dans le domaine de l'automobile. En effet, le point d'accès au réseau de téléphonie mobile est lui-même un élément portable et, dans l'état de la technique, il est proposé qu'il soit intégré à un téléphone mobile.
- L'application aux services de données fournis dans une voiture propose des services accédés via le réseau UMTS. Les terminaux, où les services sont disponibles, sont intégrés au véhicule et le réseau local est un réseau statique.
- L'interaction entre un moyen d'accès radio au réseau mobile et un réseau local sans fil est déjà connue. Mais, il n'apparaît pas la notion de réseau personnel, car le réseau local est ouvert par nature au public. Il a donc été nécessaire de mettre en oeuvre les différentes procédures pour accéder à ce réseau local, ce même réseau donne ensuite accès au réseau mobile de type W-CDMA.

La présente invention apporte remède à ces inconvénients de l'état de la technique. En effet, elle concerne un dispositif de communication pour permettre la connexion d'au moins un terminal de communications à un réseau de communications mobiles depuis un véhicule du genre comportant un serveur de connexion audit réseau de communications mobiles. Selon l'invention, le dispositif comporte:
- un réseau local constitué par au moins un terminal de communications dudit véhicule et doté de moyens de connexion sans fil ;
- un moyen pour fournir une ressource de connexion (Cext) d'au moins un terminal de communications demandeur audit réseau de communications mobiles ;
- un moyen pour fournir une ressource de connexion (Cint) entre deux terminaux de communications connectés audit réseau local lié au véhicule ;
- ledit serveur de connexion étant configuré pour établir simultanément au moins une connexion (Cint) entre deux terminaux connectés audit réseau local et au moins une connexion (Cext) avec ledit réseau de communications mobiles.

Ledit réseau local comporte un moyen de fournir une ressource de connexion d'au moins un terminal de communications demandeur et le réseau de communications mobiles ; et le serveur de connexion comporte des ressources permettant d'établir au moins une connexion (Cint) entre deux terminaux mobiles (TP_i, TP_j) connectés au réseau local (PAN) lié au véhicule et au moins une connexion (Cext) avec le réseau de communications mobiles (GPRS par exemple).

D'autres caractéristiques et avantages de la présente invention seront mieux compris à l'aide de la description et des dessins annexés parmi lesquels :
- la figure 1 représente un schéma bloc du principe du dispositif de l'invention ;
- la figure 2 représente un schéma bloc d'un mode particulier de réalisation du dispositif de l'invention ;
- la figure 3 représente un schéma bloc d'un mode particulier de réalisation du dispositif de l'invention ;
- la figure 4 représente un schéma bloc d'un mode particulier de réalisation du dispositif de l'invention.

Le dispositif de l'invention a pour première caractéristique la mise en oeuvre d'un réseau personnel sans fil à l'intérieur d'un véhicule automobile, ce réseau personnel étant constitué de différents terminaux informatiques ou de télécommunication comme de type ordinateur personnel PC, Assistant personnel de données PDA (Personal Digital Assistant), lecteur de musique MP3, téléphone mobile, tablette, etc....

Ces terminaux informatiques sont de préférence portables, c'est à dire qu'ils ne sont pas attachés de quelque façon que ce soit au véhicule automobile. Ces terminaux sont connectés au réseau personnel, dénommé réseau PAN (pour "Personal Area Network"), via une interface de communication sans contact, telle qu'une interface infrarouge IrDa ou radiofréquences Bluetooth.

Cependant, le dispositif de l'invention ne se limite pas à des terminaux portables. Il peut comporter des terminaux d'accès aux services intégrés au véhicule, qu'ils soient d'une façon privilégiée connectés au réseau PAN par des moyens de connexion sans fil, tels qu'une interface infrarouge IrDa ou Bluetooth, ou qu'ils soient connectés au réseau PAN d'une manière câblée, comme il sera expliqué dans la description.

Le dispositif de l'invention a pour seconde caractéristique la connexion du réseau PAN à un réseau de téléphonie mobile (par exemple de type GPRS ou UMTS). Cette connexion est réalisée au moyen d'un module radio assurant l'interface avec le réseau mobile. Le point commun entre le réseau mobile et le réseau PAN est appelé dans la suite du document le "dispositif de connexion au réseau mobile du réseau local". Ce dispositif de connexion au réseau mobile du réseau local assure les fonctions de routage, ce qui permet la mise en relation d'un terminal quelconque appartenant au réseau PAN avec un serveur d'applications accédé via le réseau mobile.

L'invention permet ainsi de présenter un dispositif capable d'assurer la connexion simultanée d'au plus un nombre déterminé de terminaux, comme un groupe d'au plus sept terminaux dans un piconet BlueTooth, tout en délivrant des services multimédias à des serveurs d'applications qui sont accédés via le réseau mobile. Les applications accédées n'ont aucun caractère de dépendance entre elles. Aussi, par exemple, les terminaux accèdent à des services présentant un contenu de données comme des informations textuelles, graphiques, sonores ou vidéo, et/ou un contenu de programmes de traitements de données, comme une application ASP, un service de formulaires, etc.

Selon un aspect essentiel de l'invention, l'accès aux contenus se fait grâce au dispositif de connexion au réseau mobile du réseau local d'une façon simultanée. On peut citer l'accès au réseau World Wide Web (WWW), à différents portails de services comme celui d'Orange, à des services de divertissements, d'informations de trafic, des services de vidéophonie. Cette liste est donnée pour exemple et n'est en rien limitative.

Le dispositif de l'invention a pour troisième caractéristique de disposer de moyens pour faire communiquer entre eux deux terminaux informatiques, en utilisant les ressources du dispositif de connexion au réseau mobile du réseau local. Dans ce cas, ce dernier comporte des moyens permettant d'assurer les fonctions de routage à l'intérieur du PAN, sans accéder au réseau de communications mobiles.

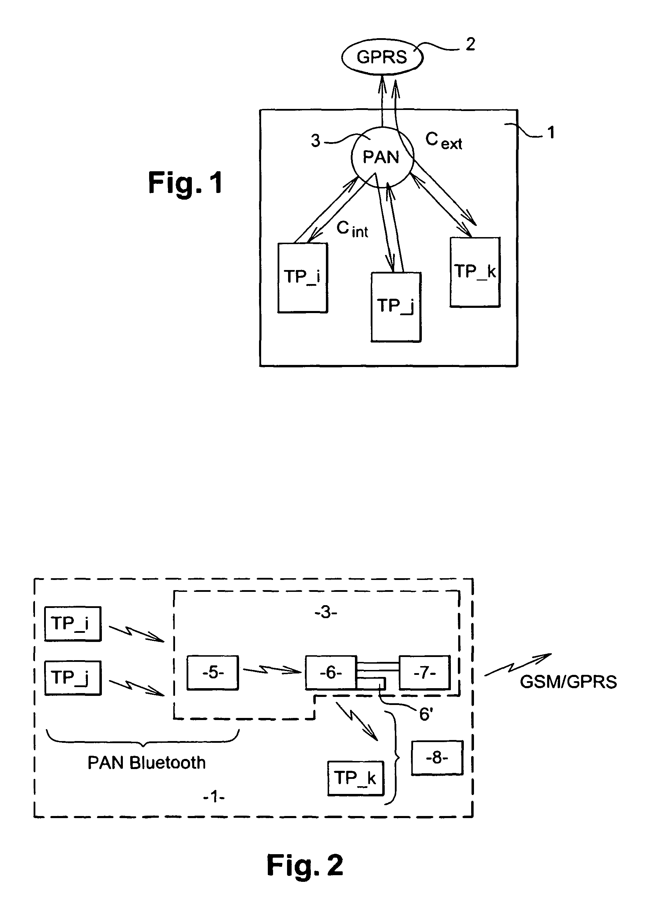

A la figure 1 est représenté un mode de réalisation d'un dispositif de l'invention quand il est implémenté dans un véhicule 1.

Le véhicule 1 peut être constitué par un véhicule automobile, par un wagon de chemin de fer, l'habitacle d'un autobus ou d'un autocar ou encore une installation du genre d'un "mobil home".

Le réseau de communications mobiles 2 peut être constitué, par exemple, par un réseau de type GPRS ou encore de type UMTS. II peut être utilisé pour accéder à des ressources informatiques ou des contenus d'information ou de données.

À l'intérieur du véhicule 1, se trouve disposer un réseau local 3 qui est doté d'une part d'un moyen de connexion aux réseaux de communication mobile 2, et d'autre part de moyens de connexion sans fil à une pluralité de terminaux TP_i, TP_j, TP_k.

Le dispositif de l'invention comporte des moyens de contrôle du réseau local 3 qui sont :
- un moyen pour connecter au moins un terminal TP_k au réseau de communications mobiles 2 par une communication extérieure Cext ;
- un moyen pour connecter au moins deux terminaux TP_i et TP_k entre eux par l'intermédiaire du réseau local 3, sans avoir à se connecter au réseau de communications mobiles 2.

Dans un mode particulier de réalisation, l'invention repose sur l'association de trois éléments.

Le premier élément est constitué par le réseau personnel PAN proprement dit. Dans un mode particulier de réalisation, le réseau personnel PAN met en oeuvre des moyens définis, par exemple, dans la technologie Bluetooth. Le profil utilisé est dénommé PAN qui est défini par le Bluetooth SIG (organisation qui élabore les spécifications Bluetooth) et est géré sur le dispositif de l'invention par un moyen de gestion de profil PAN. Les différents terminaux informatiques ont le rôle de PANU (PAN User) et le dispositif de connexion au réseau mobile du réseau local a le rôle de point d'accès NAP (Network Access Point). Le point d'accès NAP, qui est ici réalisé sur le dispositif de connexion au réseau mobile du réseau local de communication, doit être positionné en mode multi-utilisateur. Aussi dans ce cas, le point d'accès NAP coopère avec un moyen pour être configuré en maître du piconet Bluetooth, et pour positionner les différents terminaux TP_i en esclaves du piconet.

Dans un mode particulier de réalisation, le dispositif de connexion au réseau mobile du réseau local est construit sur une plate-forme de type Ipaq^{™} (Assistant personnel de données PDA, commercialisé par Hewlett-Packard). Le système d'exploitation (Operating System) est de type Linux dans sa version "Familiar".

Dans un mode particulier de réalisation, le dispositif de connexion au réseau mobile du réseau local est implémenté dans un composant électronique (circuit intégré comme un circuit intégré de type PLD) afin d'offrir une solution économique.

Le second élément de l'invention est constitué par la mise en oeuvre de l'interface de communication vers le réseau mobile préférentiellement de type GPRS. Il est constitué d'une partie matérielle (hardware) et d'une partie logicielle (software).

La partie matérielle, schématiquement représentée à la figure 2, dans laquelle les éléments communs à la figure 1 ne sont pas décrits plus avant, est implémentée par des moyens pour exécuter une interface de communication vers le réseau de téléphonie mobile.

Dans un mode de réalisation, les moyens pour exécuter une interface de communication vers le réseau de téléphonie mobile comportent trois éléments :
- le dispositif 5 de connexion du réseau mobile au réseau local de communication, déjà défini,
- un modem 7 par exemple GSM/GPRS de type Wismo (Wireless Standard Module). Ce modem coopère avec des moyens pour produire et exécuter un protocole standard dénommé "Commandes AT" et qui respecte les spécifications de la norme ETSI GSM 07/07. Dans un mode particulier de réalisation, le modem coopère avec des moyens 6', 8 de gestion de cartes SIM.
- un dispositif 6 de connexion au réseau GSM/GPRS de type "mains libres" et adapté à être monté dans l'environnement du véhicule. Dans le cas d'un véhicule automobile, un tel dispositif de connexion au réseau GSM/GPRS de type "mains libres" est constitué par un dispositif adapté comme il en existe dans le commerce sous la référence CK 4000 commercialisé par la société Parrot. Ce troisième élément 6 est disposé entre le dispositif 5 de connexion du réseau mobile au réseau local et le modem 7 comme indiqué dans la figure 2.

Dans un mode particulier de réalisation, les moyens de gestion de cartes SIM ne sont pas physiquement connectés au modem WISMO, mais les cartes SIM sont électriquement émulées par des connexions électriques fournies pas le troisième élément constitutif de l'invention. La carte SIM (ou la carte USIM pour un réseau UMTS ou une autre carte UICC d'un terminal mobile) est présente dans un téléphone mobile relié au troisième élément de l'invention via la liaison Bluetooth. Ceci permet les échanges des messages entre le modem de type Wismo et la carte SIM du mobile, ces messages étant conformes aux spécifications ETSI/GSM 07/11. Il est à noter que ce mode de réalisation n'est pas spécifique à l'invention, car la fonction dispositif de connexion au réseau mobile du réseau local n'est en rien dépendante de ce mode d'accès de la carte SIM, En effet, dans un autre mode de réalisation, le modem 6 dispose d'une carte SIM (ou une carte USIM pour un réseau UMTS ou une autre carte UICC d'un terminal mobile), celle-ci étant insérée physiquement dans le connecteur convenable (non représenté) relié par un circuit électronique au modem.

La partie logicielle est implémentée sous forme de programmes exécutés principalement au niveau du dispositif de connexion au réseau mobile du réseau local. Elle s'articule autour des fonctions suivantes.
1. Le dispositif 5 de connexion du réseau mobile au réseau local exécute la fonction essentielle de l'invention. Au niveau fonctionnel, le dispositif 5 de connexion du réseau mobile au réseau local comporte des moyens pour exécuter :
   - une fonction de constitution du réseau local PAN ;
   - une fonction de routage des messages entre chaque terminal et le serveur d'applications accédé par ledit terminal via le réseau mobile ;
   - une fonction assurant la connexion GSM/GPRS ;
   - une fonction de routage "inter-PAN", c'est-à-dire entre deux terminaux d'accès aux services (sans connexion vers la liaison GSM/GPRS).

Afin de réaliser les quatre fonctions précédentes, le dispositif 5 de connexion du réseau mobile au réseau local comporte des moyens logiciels pour assurer les fonctionnalités suivantes :
- fonction de translation d'adresses IP NAT (Network Address Translation). Cette fonction permet de translater l'adresse IP attribuée au dispositif de connexion au réseau mobile du réseau local côté PAN et l'adresse IP attribuée par le réseau mobile lors de l'activation du contexte PDP (PDP ADDRESS). Ainsi, le dispositif 5 de connexion du réseau mobile au réseau local possède deux adresses IP, l'une est attribuée par le réseau GSM/GPRS, la seconde est attribuée d'une façon statique ou dynamique lors de la constitution du réseau PAN. Ainsi, la seule adresse visible de l'extérieur (par les serveurs d'application par exemple) est la première adresse (PDP ADDRESS),
- fonction routage IP. Cette fonction permet d'assurer l'acheminement des paquets IP vers les adresses de destination,
- fonction de pont Ethernet. Cette fonction permet d'assurer un pont entre les différents terminaux constituant le PAN, l'adresse MAC (Medium Access Control) utilisée étant l'adresse Bluetooth. Cette adresse est contenue dans l'en-tête des messages de la couche BNEP de Bluetooth (Bluetooth Network Encapsulation Protocol),
- fonction de pare-feu qui permet de protéger le réseau PAN de l'extérieur,
- fonction d'activation de la connexion au réseau GSM/GPRS. Cette fonction permet d'activer et de désactiver la connexion au réseau GSM/GPRS. Il s'agit d'un ensemble de commandes appelées "commandes AT" qui sont envoyées vers le modem GSM/GPRS. Outre l'activation/désactivation de la connexion au réseau, ces commandes permettent de configurer différents paramètres de cette liaison. L'activation d'une connexion GSM/GPRS, qui est sous le contrôle du dispositif 5 de connexion du réseau mobile au réseau local, est déclenchée selon trois modalités :
   - automatiquement par un des terminaux informatiques appartenant au réseau personnel PAN lors de l'accès à un service distant ;
   - la demande d'un des terminaux d'accès ;
   - à l'initialisation du dispositif de connexion au réseau mobile du réseau local de communication. Il a alors pour objectif de maintenir la connexion active jusqu'à son arrêt ou sa réinitialisation,
- fonction d'attribution dynamique d'adresses IP de connexion Internet. Cette fonction d'attribution des adresses IP à l'intérieur du réseau PAN peut être effectuée dynamiquement par un serveur DHCP hébergé par le dispositif de connexion au réseau mobile du réseau local (DHCP: Dynamic Host Configuration Protocol),
- fonction d'attribution statique d'adresses IP de connexion Internet. Cette fonction d'attribution des adresses IP à l'intérieur du réseau PAN peut être effectuée statiquement par une ligne de commande entrée manuellement sur une console d'interface utilisateur qui, selon les modes de réalisation peut être gérée : par au moins l'un des terminaux portables TP_i, le dispositif 5 de connexion du réseau mobile au réseau local ou par le dispositif 6 de connexion au réseau GSM/GPRS.

La première solution correspond à un mode préféré de réalisation, en ce qu'elle n'implique aucune action de l'utilisateur. A l'intérieur du réseau PAN, chaque terminal dispose d'une adresse IP, y compris le dispositif de connexion au réseau mobile du réseau local. Cette adresse est attachée à l'interface Pan0, ainsi qu'il sera décrit ci-après.

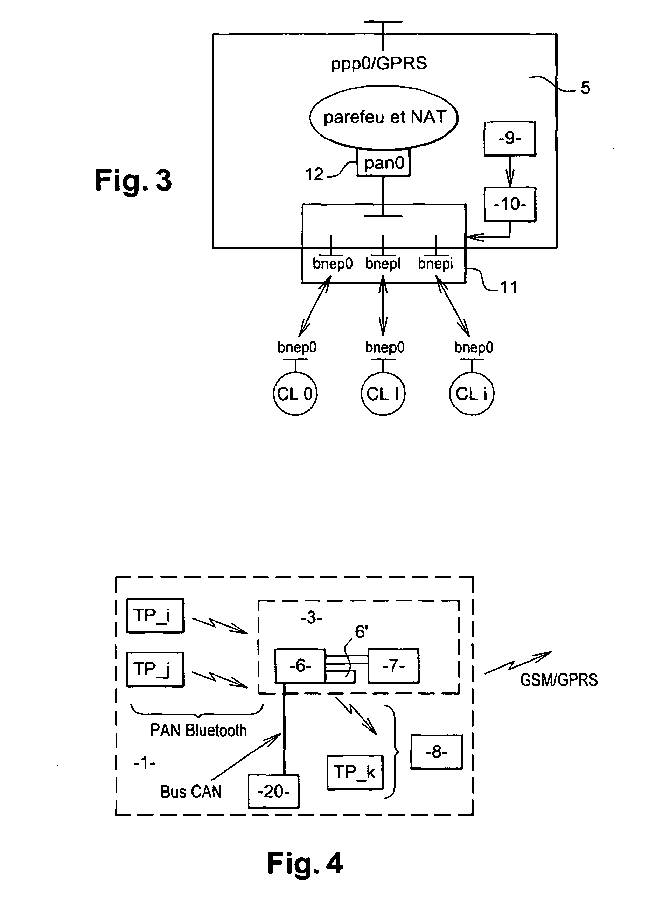

Dans le cas de la présente invention, le système d'exploitation du dispositif 5 de connexion du réseau mobile au réseau local est le système Linux. L'implémentation des fonctions du dispositif de connexion au réseau mobile du réseau local est décrite ci-après en référence à la figure 3.

Le dispositif 5 de connexion du réseau mobile au réseau local possède un démon PANd 9 dont le rôle est de créer une interface réseau virtuelle 11 de communication de type Ethernet avec un client cl.0 à cl.i.

A chaque client cl.i sera associée une interface virtuelle bnepX. Une fois que le PAN Ethernet est établi, le routage des communications peut être réalisé au niveau Ethernet ou au niveau IP, si une interface IP est associée à chaque interface virtuelle Ethernet.

Le routage Ethernet est réalisé par un pont Ethernet 11 qui est dans un exemple de réalisation un pont "802.1d Ethernet Bridging" inclus dans le noyau Linux 2.4.x .

Le pont Ethernet 11 est initialisé sur le dispositif 5 de connexion du réseau mobile au réseau local de communication qui fait office de point d'accès NAP. Il crée une nouvelle interface virtuelle pan0 combinant les interfaces bnepX créées pour chaque client connecté.

Une fois cette opération réalisée, les clients sont directement adressables par l'adresse MAC des périphériques Bluetooth et le dispositif 5 de connexion du réseau mobile au réseau local par l'adresse MAC de son périphérique Bluetooth.

Dans le cadre du routage IP, une adresse IP est associée à chaque interface virtuelle Ethernet. Cette adresse est assignée soit par un mécanisme automatique comme un mécanisme DHCP, soit de façon statique. Une fois les adresses IP attribuées, le dispositif 5 de connexion du réseau mobile au réseau local de communication devient la passerelle du PAN, ce qui lui donne la possibilité de router les paquets IP vers la destination souhaitée (à l'intérieur du PAN ou vers l'extérieur).

Afin de connecter les clients sur un réseau extérieur, le dispositif 5 de connexion du réseau mobile au réseau local de communication établit une nouvelle interface de communication de type PPPO/GPRS. Il utilise alors les fonctionnalités de translation d'adresses IP NAT et de pare-feu, présentes dans le noyau Linux 2.4.x, qui lui permettent de ne faire apparaître d'une seule entité sur le réseau extérieur (qui peut être, par exemple, le réseau GPRS) et de protéger les clients.

En se référant à la figure 3, Cli désigne les terminaux d'accès aux services ; Bnep0 désigne l'interface réseau virtuelle sur les terminaux d'accès aux services et sur le dispositif de connexion au réseau mobile du réseau local pour former le point d'accès PAN ; Pan0 désigne l'interface réseau du dispositif de connexion au réseau mobile du réseau local côté réseau PAN et PPPO/GPRS désigne l'interface réseau du dispositif de connexion au réseau mobile du réseau local côté GSM/GPRS

Dans le mode de réalisation présenté à la figure 2, la connexion des terminaux d'accès aux services se fait par l'intermédiaire d'une liaison radio de courte distance de type Bluetooth. Une connexion de type WiFi peut être implémentée avec les modifications que l'homme de métier saura faire à la lumière de la présente description.

Cela correspond au cas où ces terminaux TP_i sont portables, un terminal portable appartenant à chaque utilisateur.

Dans un autre mode de réalisation représenté à la figure 4, dans laquelle les mêmes éléments que ceux de la figure 2 portent les mêmes numéros de référence et ne sont pas plus décrits, d'autres types de terminaux peuvent être connectés au réseau, il s'agit des terminaux attachés physiquement au véhicule 1.

A titre d'exemple, un système d'aide à la navigation 20 est physiquement intégré au tableau de bord du véhicule automobile 1. En tant que terminal du réseau local 3, le système d'aide à la navigation 20 est connecté de deux façons au dispositif de connexion au réseau mobile du réseau local de communication:
- par une interface radio de type Bluetooth ou par une interface infrarouge IrDa (comme dans le cas des terminaux portables),
- par une connexion filaire. Dans ce cas, le dispositif 5 (non représenté à la figure 4) de connexion du réseau mobile au réseau local doit offrir une liaison filaire vers ce terminal 20, soit directement via une liaison de préférence de type série, soit par une connexion 21 via le troisième élément (dispositif 6 de connexion au réseau GSM/GPRS). Dans ce dernier cas, la connexion peut alors emprunter d'autres types de liaison, comme le bus CAN^{™} Controller Area Network. Cette solution de connexion filaire n'est pas plus décrite dans le cadre du présent mode de réalisation.

2. Le modem Wismo 7 peut être réalisé par tout modem de communication de ce type disponible dans le commerce. II ne nécessite pas de mise à jour particulière de sa version logicielle pour remplir les fonctions nécessaires de communications associées à la mise en oeuvre de l'invention.

3. Le dispositif 6 de connexion au réseau GSM/GPRS assure la connexion entre le dispositif 5 de connexion du réseau mobile au réseau local et le modem 7. Cet élément est donc transparent, il n'assure que le transport des données entre ces deux éléments. Cette fonction est rendue nécessaire quand le dispositif de l'invention est implémenté en trois éléments distincts.

Cette implémentation des fonctions en trois éléments distincts : dispositif de connexion au réseau mobile du réseau local, modem, dispositif 6 de connexion au réseau GSM/GPRS, ne doit pas être comprise comme obligatoire. Seules les fonctions qui y sont exécutées et qui ont été décrites le sont. En effet, les fonctions du dispositif de connexion au réseau mobile du réseau local réalisées par le premier élément (Ipaq) pourraient être implémentées dans le dispositif 6 de connexion au réseau GSM/GPRS.

Ce deuxième mode de réalisation, décrit dans la figure 4, est donc architecturé autour de deux éléments : le dispositif 6 de connexion au réseau GSM/GPRS qui assure les fonctions du dispositif de connexion au réseau mobile du réseau local, et le modem GSM/GPRS qui assure l'interface radio avec le réseau mobile.

Dans ce mode de réalisation, on a disposé une connexion filaire au moyen d'un accès au bus CAN^{™} entre un équipement intégré à la voiture et le dispositif de connexion au réseau mobile du réseau local. Il s'agit d'un système d'aide à la navigation.

## Revendications

1. - Dispositif de communication pour une connexion à un réseau de communications mobiles (2) d'au moins un terminal de communications parmi un, ensemble de terminaux (TP_i, TP_j, TP_k), au moins un desdits terminaux étant intégré à un véhicule ledit véhicule comportant un serveur de connexion audit réseau de communications mobiles (2), **caractérisé en ce que** ledit dispositif comporte :
- un réseau local (3) doté de moyens de connexion sans fil et constitué par au moins un desdits terminaux de communications 10 (TP_i) dudit véhicule (1) ;
- un moyen pour fournir une ressource de connexion (Cext) d'au moins un desdits terminaux de communications (TP_k) demandeur audit réseau de communications mobiles (2);
- un moyen pour fournir une ressource de connexion (Cint) entre 15 deux desdits terminaux de communications (TP_i, TP_j) connectés audit réseau local (3) ;
- ledit serveur de connexion étant configuré pour établir simultanément au moins une connexion (Cint) entre deux terminaux (TP_i, TP_j) connectés audit réseau local (3) et au 20 moins une connexion (Cext) avec ledit réseau de communications mobiles (2), par l'intermédiaire d'au moins une interface avec ledit réseau mobile (2) et un dispositif (5) de connexion du réseau mobile (2) audit réseau local (3).

2. - Dispositif selon la revendication 1, **caractérisé en ce** 25 que la connexion du réseau local (3) à un réseau de téléphonie mobile est réalisée au moyen d'un module radio assurant l'interface avec le réseau mobile.

3. - Dispositif selon la revendication 2, **caractérisé en ce que** le point commun entre le réseau mobile et le réseau local (3) 30 comporte un dispositif (5) de connexion du réseau mobile au réseau local, qui assure les fonctions de routage, ce qui permet la mise en relation d'un terminal quelconque appartenant au réseau local (3) avec un serveur d'applications accédé via le réseau mobile.

4. - Dispositif selon la revendication 3, **caractérisé en ce que** l'accès aux contenus se fait grâce au dispositif (5) de connexion du réseau mobile au réseau local d'une façon simultanée.

5. - Dispositif selon la revendication 4, **caractérisé en ce que** les moyens pour faire communiquer entre eux deux desdits terminaux (TP_i, TP_j) utilisent les ressources du dispositif (5) de connexion du réseau mobile au réseau local, qui comporte des moyens permettant d'assurer les fonctions de routage à l'intérieur du réseau local (3), sans accéder au réseau de communications mobiles.

6. - Dispositif selon l'une des revendications précédentes, **caractérisé en ce qu'**il comporte :
- un réseau local personnel (3) ;
- une interface de communication vers le réseau.

7. - Dispositif selon la revendication 6, **caractérisé en ce que** le réseau local (3) met en oeuvre des moyens définis dans la technologie Bluetooth^{™} et comporte notamment un moyen de gestion de profil, un point d'accès NAP (Network Access Point), positionné en mode multi-utilisateur et un moyen pour être configuré en maître de piconet Bluetooth^{™} et pour positionner les différents terminaux TP_i en esclaves de piconet.

8. - Dispositif selon l'une quelconque des revendications 6 ou 7, **caractérisé en ce qu'**il comporte un dispositif (5) de connexion du réseau mobile au réseau local construit sur une plate-forme exécutant un système d'exploitation de type Linux.

9. - Dispositif selon l'une quelconque des revendications 6 ou 7, **caractérisé en ce qu'**il comporte un dispositif (5) de connexion du réseau mobile au réseau local implémenté dans un composant électronique.

10. - Dispositif selon la revendication 6, **caractérisé en ce que** l'interface de communication vers le réseau comporte une partie matérielle, comportant séparément ou en combinaison :
- un dispositif (5) de connexion du réseau mobile au réseau local de communication,
- un modem (7) de type Wismo (Wireless Standard Module),
- un dispositif (6) de connexion au réseau mobiles (2) de type "mains libres" et adapté à être monté dans l'environnement du véhicule (1), disposé entre le dispositif (5) de connexion du réseau mobile au réseau local et le modem (7).

11. - Dispositif selon la revendication 10, **caractérisé en ce que** le modem (7) coopère avec des moyens pour produire et exécuter un protocole standard dénommé "Commandes AT".

12. - Dispositif selon la revendication 10, **caractérisé en ce que** le modem (7) coopère avec des moyens (6', 8) de gestion de cartes SIM.

13. - Dispositif selon la revendication 12, **caractérisé en ce que** les moyens (6', 8) de gestion de cartes SIM comportent des moyens d'émulation de cartes SIM par des connexions électriques au dispositif (6) de connexion au réseau mobile, **en ce qu'**une carte SIM est présente dans un téléphone mobile (TP_k) relié au dispositif (6) de connexion au réseau GSM/GPRS via la liaison Bluetooth^{™}, pour permettre les échanges des messages entre le modem (7) et la carte SIM du mobile (TP_k).

14. - Dispositif selon la revendication 12, **caractérisé en ce que** les moyens (6', 8) de gestion de cartes SIM coopèrent avec le modem (7) qui dispose d'un moyen de gestion de cartes SIM une carte SIM y étant insérée physiquement dans le connecteur convenable.

15. - Dispositif selon la revendication 6, **caractérisé en ce que** l'interface de communication vers le réseau comporte une partie logicielle implémentée sous forme de programmes exécutés au niveau du dispositif (5) de connexion du réseau mobile au réseau local.

16. - Dispositif selon la revendication 15, **caractérisé en ce que** le dispositif (5) de connexion du réseau mobile au réseau local comporte des moyens pour exécuter au moins :
- une fonction de constitution du réseau personnel ;
- une fonction de routage des messages entre chaque terminal et le serveur d'applications accédé par ledit terminal via le réseau mobile ;
- une fonction assurant la connexion GSM/GPRS ; et
- une fonction de routage "inter-PAN", c'est à dire entre deux terminaux d'accès aux services (sans connexion vers la liaison GSM/GPRS).

17. - Dispositif selon la revendication 16, **caractérisé en ce que** le dispositif (5) de connexion du réseau mobile (2) au réseau local (3) comporte des moyens logiciels pour assurer au moins l'une des fonctionnalités suivantes :
- fonction de translation d'adresses IP NAT (Network Address Translation) ;
- fonction de routage IP pour assurer l'acheminement des paquets IP vers les adresses de destination ;
- fonction de pont Ethernet pour assurer un pont entre les différents terminaux constituant le réseau local (3) ;
- fonction de pare-feu qui permet de protéger le réseau local (3) de l'extérieur ;
- fonction d'activation de la connexion au réseau pour les mobiles (2) pour activer et désactiver la connexion audit réseau mobiles (2) ;
- fonction d'attribution dynamique d'adresses IP de connexion Internet. Cette fonction d'attribution des adresses IP à l'intérieur du réseau local (3) peut être effectuée dynamiquement par un serveur DHCP hébergé par le dispositif de connexion au réseau mobile du réseau local (DHCP: Dynamic Host Configuration Protocol) ;
- fonction d'attribution statique d'adresses IP de connexion Internet, cette fonction d'attribution des adresses IP à l'intérieur du réseau local (3) pouvant être effectuée statiquement par une ligne de commande entrée manuellement sur une console d'interface utilisateur qui, selon les modes de réalisation peut être gérée : par au moins l'un des terminaux TP_i, le dispositif (5) de connexion du réseau mobile au réseau local ou par le dispositif (6) de connexion au réseau mobiles (2).

18. - Dispositif selon la revendication 17, **caractérisé en ce que** la fonction de translation d'adresse IP assure la translation de l'adresse IP attribuée au dispositif (5) de connexion du réseau mobile au réseau local (3) et l'adresse IP attribuée par le réseau mobile lors de l'activation du contexte PDP (PDP ADDRESS), de sorte que le dispositif (5) de connexion du réseau mobile au réseau local possède deux adresses IP, l'une attribuée par le réseau GSM/GPRS, la seconde attribuée d'une façon statique ou dynamique lors de la constitution du réseau local (3), la seule adresse visible de l'extérieur (par les serveurs d'application par exemple) étant la première adresse (PDP ADDRESS).

19. - Dispositif selon la revendication 17, **caractérisé en ce que** la fonction de pont Ethernet exploite une adresse MAC (Medium Access Control) sur la base de l'adresse Bluetooth^{™}, contenue dans l'en-tête des messages de la couche BNEP de Bluetooth^{™} (Bluetooth Network Encapsulation Protocol).

20. - Dispositif selon la revendication 17, **caractérisé en ce que** la fonction d'activation de la connexion au réseau GSM/GPRS pour activer et désactiver la connexion au réseau GSM/GPRS comporte un processeur de "commandes AT" qui sont envoyées vers le modem GSM/GPRS, qui permettent aussi de configurer différents paramètres de cette liaison.

21. - Dispositif selon la revendication 20, **caractérisé en ce que** la fonction d'activation d'une connexion GSM/GPRS, qui est sous le contrôle du dispositif (5) de connexion du réseau mobile au réseau local, est déclenchée selon trois modalités :
automatiquement par un des terminaux lors de l'accès à un service distant ;
à la demande d'un des terminaux d'accès;
à l'initialisation du dispositif de connexion au réseau mobile du réseau local de communication, pour maintenir la connexion active jusqu'à son arrêt ou sa réinitialisation.

22. - Dispositif selon la revendication 17, **caractérisé en ce que** la fonction d'attribution dynamique d'adresses IP de connexion Internet est effectuée dynamiquement par un serveur DHCP hébergé par le dispositif de connexion au réseau mobile du réseau local.

23. - Dispositif selon la revendication 17, **caractérisé en ce que** la fonction d'attribution statique d'adresses IP de connexion Internet est effectuée statiquement par une ligne de commande entrée manuellement sur une console d'interface utilisateur qui, selon les modes de réalisation peut être gérée : par au moins l'un des terminaux (TP_i), le dispositif (5) de connexion du réseau mobile au réseau local ou par le dispositif (6) de connexion au réseau GSM/GPRS.

24. - Dispositif selon la revendication 16, **caractérisé en ce que** le dispositif (5) de connexion du réseau mobile au réseau local possède un démon PANd (9) pour créer une interface réseau virtuelle (11) de communication de type Ethernet avec un client (cl.0 à cl.i).

25. - Dispositif selon la revendication 24, **caractérisé en ce que** le routage Ethernet est réalisé par un pont Ethernet (11) comme un pont "802.1d Ethernet Bridging" inclus dans le noyau Linux 2.4.x, initialisé sur le dispositif (5) de connexion du réseau mobile au réseau local de communication qui fait office de point d'accès NAP pour créer une nouvelle interface virtuelle pan0 combinant les interfaces bnepX créées pour chaque client connecté.

26. - Dispositif selon la revendication 24, **caractérisé en ce que** la fonction de routage IP exécute l'association d'une adresse IP à chaque interface virtuelle Ethernet, adresse assignée soit par un mécanisme automatique comme un mécanisme DHCP, soit de façon statique, de sorte que, une fois les adresses IP attribuées, le dispositif (5) de connexion du réseau mobile au réseau local de communication devient la passerelle du réseau local (3), ce qui lui donne la possibilité de router les paquets IP vers la destination souhaitée à l'intérieur du réseau local (3) ou vers l'extérieur.

27. - Dispositif selon la revendication 26, **caractérisé en ce que** afin de connecter les clients sur un réseau extérieur, le dispositif (5) de connexion du réseau mobile au réseau local de communication établit une nouvelle interface de communication de type PPPO/GPRS, de sorte de ne faire apparaître d'une seule entité sur le réseau extérieur et de protéger les clients.

28. - Dispositif selon la revendication 10, **caractérisé en ce que** le dispositif (6) de connexion au réseau GSM/GPRS pour assurer la connexion entre le dispositif (5) de connexion du réseau mobile au réseau local et le modem (7) n'assure que le transport des données entre ces deux éléments.

## Claims

1. A communications device for enabling connection of a communications terminal of a set of terminals (TP_i, TP_j, TP_k) to a mobile communications network (2), at least one of said terminals being inserted into a vehicle (1), said vehicle including a server for connecting to said mobile communications network (2), **characterized in that** said device comprises:
- a local network (3) linked to the vehicle and consisting of at least one of said communications terminals (TP_i) of said vehicle (1) and is provided with wireless connection means;
- means for providing a resource (Cext) for connecting at least one of said requesting communications terminals (Tp_k) to said mobile communications network (2);
- means for providing a resource (Cint) for interconnecting two of said communications terminals (Tp_i, Tp_j) connected to said local network (3); and
- said connection server being configured to establish simultaneously at least one connection (Cint) and at least one connection (Cext) connected to said local network (3) and at least one connection (Cext) with said communications network (2), via at least one interface with the mobile network (2) and a device (5) for connecting the local network (3) to the mobile network (2).

2. A device according to claim 1, **characterized in that** the local network (3) is connected to a mobile telephone network by a radio module providing the interface with the mobile network.

3. A device according to claim 2, **characterized in that** the common point between the mobile network and the local network (3) includes a device (5) for connecting the local network to the mobile network which provides routing functions, enabling the connection of any terminal of the local network (3) to an application server accessed via the mobile network.

4. A device according to claim 3, **characterized in that** different contents are accessed simultaneously by the device (5) for connecting the local network to the mobile network.

5. A device according to claim 4, **characterized in that** the means for enabling communication between two of said terminals (TP_i, TP_j) use the resources of the device (5) for connecting the local network to the mobile network, which includes means for providing the routing functions within the local network (3) without accessing the mobile communications network.

6. A device according to any one of the preceding claims, **characterized in that** it includes:
- a personal local network (3);
- a communications interface to the network.

7. A device according to claim 6, **characterized in that** the local network (3) uses means defined in the Bluetooth^{™} technology and includes in particular profile management means, a network access point NAP set to multi-user mode, and means for configuring it as a Bluetooth^{™} piconet master and the various terminals TP_i as piconet slaves.

8. A device according to either claim 6 or claim 7, **characterized in that** it includes a device (5) for connecting the local network to the mobile network constructed on a platform executing a Linux type operating system.

9. A device according to either claim 6 or claim 7, **characterized in that** it includes a device (5) for connecting the local network to the mobile network implemented in an electronic component.

10. A device according to claim 6, **characterized in that** the communications interface to the network includes a hardware portion including, separately or in combination:
- a device (5) for connecting the local network to the mobile network,
- a WISMO (WIreless Standard MOdule) type modem (7),
- a handsfree mobile network connection device (6) adapted to be mounted in the vehicle (1) and disposed between the modem (7) and the device (5) for connecting the local network to the mobile network.

11. A device according to claim 10, **characterized in that** the modem (7) cooperates with means for producing and executing a standard AT Commands protocol.

12. A device according to claim 10, **characterized in that** the modem (7) cooperates with SIM card management means (6', 8).

13. A device according to claim 12, **characterized in that** the SIM card management means (6', 8) include means for emulating SIM cards by electrical connections to the mobile network connection device (6), and a SIM card in a mobile telephone (TP_k) connected to the GSM/GPRS network connection device (6) via the Bluetooth^{™} connection enables exchange of messages between the modem (7) and the SIM card of the mobile telephone (TP_k).

14. A device according to claim 12, **characterized in that** the SIM card management means (6', 8) co-operate with the modem (7), which includes SIM card management means, a SIM card therein being physically inserted into the appropriate connector.

15. A device according to claim 6, **characterized in that** the communications interface to the network includes a software portion implemented in the form of programs executed at the level of the device (5) for connecting the local network to the mobile network.

16. A device according to claim 15, **characterized in that** the device (5) for connecting the local network to the mobile network includes means for executing at least the following functions:
- personal network constitution;
- routing messages between each terminal and the application server accessed by said terminal via the mobile network;
- a GSM/GPRS connection; and
- inter-PAN routing, i.e. routing between two services access terminals (with no connection to the GSM/GPRS connection).

17. A device according to claim 16, **characterized in that** the device (5) for connecting the local network (3) to the mobile network (2) includes software means for providing one or more of the following functions:
- IP NAT (network address translation);
- IP routing, for routing IP packets to their destination addresses;
- an Ethernet bridge between the terminals constituting the local network (3);
- a firewall for protecting the local network (3) from external attack;
- activation and deactivation of the mobile network connection;
- dynamically assigning Internet connection IP addresses; assigning IP addresses within the local network (3) may be effected dynamically by a Dynamic Host Configuration Protocol (DHCP) server hosted by the device for connecting the local network to the mobile network;
- statically assigning Internet connection IP addresses; assigning IP addresses within the local network (3) may be effected statically by a command line entered manually at a user interface console which, depending on the embodiment, may be managed by at least one of the terminals TP_i, the device (5) for connecting the local network to the mobile network or the mobile network connection device (6).

18. A device according to claim 17, **characterized in that** the IP address translation function translates the IP address assigned to the device (5) for connecting the local network (3) to the mobile network and the IP address assigned by the mobile network on activation of the PDP context (PDP ADDRESS), so that the device (5) for connecting the local network to the mobile network has two IP addresses, one assigned by the GSM/GPRS network and the second assigned statically or dynamically upon constitution of the local network (3), the only address visible from the outside (for example to application servers) being the first address (PDP ADDRESS).

19. A device according to claim 17, **characterized in that** the Ethernet bridge function uses a Medium Access Control (MAC) address based on the Bluetooth^{™} address contained in the header of the messages of the Bluetooth^{™} Network Encapsulation Protocol (BNEP) layer.

20. A device according to claim 17, **characterized in that** the function for activating and deactivating the GSM/GPRS network connection includes a processor of AT commands that are sent to the GSM/GPRS modem and are used to configure parameters of this connection.

21. A device according to claim 20, **characterized in that** the function for activating the GSM/GPRS network connection, which is under the control of the device (5) for connecting the local network to the mobile network, is triggered in three different modes:
· automatically by one of the terminals upon access to a remote service;
· at the request of one of the access terminals;
· upon initialization of the system for connecting the local network to the mobile network, to maintain the connection active until it is stopped or reinitialized.

22. A device according to claim 17, **characterized in that** the dynamic Internet connection IP address assignment function is provided by a DHCP server hosted by the device (5) for connecting the local network to the mobile network.

23. A device according to claim 17, **characterized in that** the static Internet connection IP address assignment function is executed by a command line entered manually at a user interface console which, depending on the embodiment, may be managed by at least one of the terminals (TP_i), the device (5) for connecting the local network to the mobile network or the GSM/GPRS network connection device (6).

24. A device according to claim 16, **characterized in that** the device (5) for connecting the local network to the mobile network has a PAN demon (PANd) (9) for creating a virtual Ethernet network interface (11) for communication with a client (CL 0 to CL 1).

25. A device according to claim 24, **characterized in that** Ethernet routing is effected by an Ethernet bridge (11) such as an 802.1d Ethernet bridge included in the Linux 2.4.x kernel, initialized on the device (5) for connecting the local network to the mobile network that serves as a network access point NAP for creating a new virtual interface pan0 combining the interfaces bnepX created for each connected client.

26. A device according to claim 24, **characterized in that** the IP routing function associates with each virtual Ethernet interface an IP address assigned either by an automatic mechanism, such as a DHCP mechanism, or statically, so that, once the IP addresses have been assigned, the device (5) for connecting the local network to the mobile network becomes the gateway of the local network (3), which enables it to route IP packets to the required destination within the local network (3) or externally.

27. A device according to claim 26, **characterized in that**, in order to connect clients to an external network, the device (5) for connecting the local network to the mobile network establishes a new ppp0/GPRS communications interface so as to show only a single entity on the external network and to protect clients.

28. A device according to claim 10, **characterized in that** the GSM/GPRS network connection device (6) for providing the connection between the modem (7) and the device (5) for connecting the local network to the mobile network merely transports data between these two elements.

## Patentansprüche

1. Kommunikationsvorrichtung für eine Verbindung mit einem Mobilkommunikationsnetz (2) von mindestens einem Kommunikationsendgerät unter einer Einheit von Endgeräten (TP_i, TP_j, TP_k), wobei mindestens eines der Endgeräte in ein Fahrzeug (1) integriert ist, wobei das Fahrzeug einen Verbindungsserver mit dem Mobilkommunikationsnetz (2) aufweist, **dadurch gekennzeichnet, dass** die Vorrichtung aufweist:
- ein lokales Netzwerk (3), das mit drahtlosen Verbindungsmitteln versehen ist und aus mindestens einem der Kommunikationsendgeräte (TP_i) des Fahrzeugs (1) besteht;
- ein Mittel, um eine Verbindungsressource (Cext) mindestens eines der anfragenden Kommunikationsendgeräte (TP_k) an das Mobilkommunikationsnetz (2) zu liefern;
- ein Mittel, um eine Verbindungsressource (Cint) zwischen zwei der Kommunikationsendgeräte (TP_i, TP_j) zu liefern, die mit dem lokalen Netzwerk (3) verbunden sind;
- wobei der Verbindungsserver konfiguriert ist, um gleichzeitig mindestens eine Verbindung (Cint) zwischen zwei mit dem lokalen Netzwerk (3) verbundenen Endgeräten (TP_i, TP_j) und mindestens eine Verbindung (Cext) mit dem Mobilkommunikationsnetz (2) über mindestens eine Schnittstelle mit dem Mobilnetz (2) und eine Vorrichtung (5) zur Verbindung des Mobilnetzes (2) mit dem lokalen Netzwerk (3) aufzubauen.

2. Vorrichtung nach Anspruch 1, **dadurch gekennzeichnet, dass** die Verbindung des lokalen Netzwerks (3) mit einem Mobiltelefonienetz mittels eines Funkmoduls hergestellt wird, das die Schnittstelle mit dem Mobilnetz gewährleistet.

3. Vorrichtung nach Anspruch 2, **dadurch gekennzeichnet, dass** der gemeinsame Punkt zwischen dem Mobilnetz und dem lokalen Netzwerk (3) eine Vorrichtung (5) zur Verbindung des Mobilnetzes mit dem lokalen Netzwerk aufweist, die die Routingfunktionen gewährleistet, was die Verbindung eines beliebigen zum lokalen Netzwerk (3) gehörenden Endgeräts mit einem Applikationsserver ermöglicht, auf den über das Mobilnetz zugegriffen wird.

4. Vorrichtung nach Anspruch 3, **dadurch gekennzeichnet, dass** der Zugriff auf die Inhalte mit Hilfe der Vorrichtung (5) zur Verbindung des Mobilnetzes mit dem lokalen Netzwerk gleichzeitig erfolgt.

5. Vorrichtung nach Anspruch 4, **dadurch gekennzeichnet, dass** die Mittel zur Kommunikation zwischen zwei der Endgeräte (TP_i, TP_j) die Ressourcen der Vorrichtung (5) zur Verbindung des Mobilnetzes mit dem lokalen Netzwerk nutzen, die Mittel aufweist, die es ermöglichen, die Routingfunktionen innerhalb des lokalen Netzwerks (3) zu gewährleisten, ohne auf das Mobilkommunikationsnetz zuzugreifen.

6. Vorrichtung nach einem der vorhergehenden Ansprüche, **dadurch gekennzeichnet, dass** sie aufweist:
- ein persönliches lokales Netzwerk (3);
- eine Kommunikationsschnittstelle zum Netz.

7. Vorrichtung nach Anspruch 6, **dadurch gekennzeichnet, dass** das lokale Netzwerk (3) Mittel einsetzt, die in der Bluetooth^{™}-Technologie definiert sind, und insbesondere ein Profilverwaltungsmittel, einen NAP-Zugriffspunkt (Network Access Point), der im Mehrnutzermodus positioniert ist, und ein Mittel aufweist, um als Bluetooth^{™} Piconet-Master konfiguriert zu werden und um die verschiedenen Endgeräte TP_i als Piconet-Slave zu positionieren.

8. Vorrichtung nach einem der Ansprüche 6 oder 7, **dadurch gekennzeichnet, dass** sie eine Vorrichtung (5) zur Verbindung des Mobilnetzes mit dem lokalen Netzwerk aufweist, die auf einer Plattform aufgebaut ist, die ein Betriebssystem vom Typ Linux ausführt.

9. Vorrichtung nach einem der Ansprüche 6 oder 7, **dadurch gekennzeichnet, dass** sie eine Vorrichtung (5) zur Verbindung des Mobilnetzes mit dem lokalen Netzwerk aufweist, die in einem elektronischen Bauteil implementiert wird.

10. Vorrichtung nach Anspruch 6, **dadurch gekennzeichnet, dass** die Kommunikationsschnittstelle zum Netz einen Hardware-Teil aufweist, der getrennt oder kombiniert aufweist:
- eine Vorrichtung (5) zur Verbindung des Mobilnetzes mit dem lokalen Kommunikationsnetzwerk,
- ein Modem (7) vom Typ Wismo (Wireless Standard Module),
- eine Vorrichtung (6) zur Verbindung mit dem Mobilnetz (2) vom "Freisprech"-Typ und geeignet, um in die Umgebung des Fahrzeugs (1) montiert zu werden, angeordnet zwischen der Vorrichtung (5) zur Verbindung des Mobilnetzes mit dem lokalen Netzwerk und dem Modem (7).

11. Vorrichtung nach Anspruch 10, **dadurch gekennzeichnet, dass** das Modem (7) mit Mitteln zusammenwirkt, um ein Standardprotokoll "AT-Kommandos" zu erzeugen und auszuführen.

12. Vorrichtung nach Anspruch 10, **dadurch gekennzeichnet, dass** das Modem (7) mit Mitteln (6', 8) zur Verwaltung von SIM-Karten zusammenwirkt.

13. Vorrichtung nach Anspruch 12, **dadurch gekennzeichnet, dass** die Mittel (6', 8) zur Verwaltung von SIM-Karten Mittel zur Emulation von SIM-Karten über elektrische Verbindungen mit der Vorrichtung (6) zur Verbindung mit dem Mobilnetz aufweist, dass eine SIM-Karte in einem Mobiltelefon (TP_k) vorhanden ist, das mit der Vorrichtung (6) zur Verbindung mit dem GSM/GPRS-Netzwerk über die Bluetooth^{™}-Verbindung verbunden ist, um die Mitteilungs-Austauschvorgänge zwischen dem Modem (7) und der SIM-Karte des Mobiltelefons (TP_k) zu erlauben.

14. Vorrichtung nach Anspruch 12, **dadurch gekennzeichnet, dass** die Mittel (6', 8) zur Verwaltung von SIM-Karten mit dem Modem (7) zusammenwirken, das über ein Mittel zur Verwaltung von SIM-Karten verfügt, wobei eine SIM-Karte physikalisch in den geeigneten Verbinder eingesteckt ist.

15. Vorrichtung nach Anspruch 6, **dadurch gekennzeichnet, dass** die Kommunikationsschnittstelle zum Netz einen Software-Teil aufweist, der in Form von Programmen implementiert ist, die auf der Ebene der Vorrichtung (5) zur Verbindung des Mobilnetzes mit dem lokalen Netzwerk ausgeführt werden.

16. Vorrichtung nach Anspruch 15, **dadurch gekennzeichnet, dass** die Vorrichtung (5) zur Verbindung des Mobilnetzes mit dem lokalen Netzwerk Mittel aufweist, um mindestens auszuführen:
- eine Funktion des Aufbaus des persönlichen Netzwerks;
- eine Routingfunktion der Mitteilungen zwischen jedem Endgerät und dem Applikationsserver, auf den das Endgerät über das Mobilnetz zugreift;
- eine Funktion, die die GSM/GPRS-Verbindung gewährleistet; und
- eine Routingfunktion "inter-PAN", d.h. zwischen zwei Endgeräten für den Zugriff auf die Dienste (ohne Verbindung zur GSM/GPRS-Verbindung).

17. Vorrichtung nach Anspruch 16, **dadurch gekennzeichnet, dass** die Vorrichtung (5) zur Verbindung des Mobilnetzes (2) mit dem lokalen Netzwerk (3) Software-Mittel aufweist, um mindestens eine der folgenden Funktionalitäten zu gewährleisten:
- Funktion der IP-Adressenübersetzung NAT (Network Address Translation);
- IP-Routingfunktion, um die Weiterleitung der IP-Pakete zu den Zieladressen zu gewährleisten;
- Funktion einer Ethernet-Brücke, um eine Brücke zwischen den verschiedenen Endgeräten zu gewährleisten, die das lokale Netzwerk (3) bilden;
- Firewall-Funktion, die es ermöglicht, das lokale Netzwerk (3) vor der Außenumgebung zu schützen;
- Aktivierungsfunktion der Verbindung mit dem Netz für die Mobiltelefone (2), um die Verbindung mit dem Mobilnetz (2) zu aktivieren und zu deaktivieren;
- Funktion der dynamischen Zuweisung von Internetanschluss-IP-Adressen; diese Funktion der Zuweisung der IP-Adressen innerhalb des lokalen Netzwerks (3) kann dynamisch von einem DHCP-Server durchgeführt werden, der in der Vorrichtung zur Verbindung des lokalen Netzwerks mit dem Mobilnetz untergebracht ist (DHCP: Dynamic Host Configuration Protocol);
- Funktion der statischen Zuweisung von Internetanschluss-IP-Adressen, wobei diese Funktion der Zuweisung der IP-Adressen innerhalb des lokalen Netzwerks (3) statisch von einer Kommandozeile durchgeführt werden, die manuell auf einer Benutzerschnittstelle-Konsole eingegeben wird, die je nach den Ausführungsmodi verwaltet werden kann: von mindestens einem der Endgeräte TP_i, der Vorrichtung (5) zur Verbindung des Mobilnetzes mit dem lokalen Netzwerk oder von der Vorrichtung (6) zur Verbindung mit dem Mobilnetz (2).

18. Vorrichtung nach Anspruch 17, **dadurch gekennzeichnet, dass** die Funktion der IP-Adresse-Übersetzung die Übersetzung der der Vorrichtung (5) zur Verbindung des Mobilnetzes mit dem lokalen Netzwerk (3) zugewiesenen IP-Adresse und der vom Mobilnetz bei der Aktivierung des Kontexts PDP (PDP ADDRESS) zugewiesenen IP-Adresse gewährleistet, so dass die Vorrichtung (5) zur Verbindung des Mobilnetzes mit dem lokalen Netzwerk zwei IP-Adressen besitzt, die eine vom GSM/GPRS-Netz zugewiesen, die andere statisch oder dynamisch beim Aufbau des lokalen Netzwerks (3) zugewiesen, wobei die einzige von außen (zum Beispiel für die Applikationsserver) sichtbare Adresse die erste Adresse (PDP ADDRESS) ist.

19. Vorrichtung nach Anspruch 17, **dadurch gekennzeichnet, dass** die Funktion einer Ethernet-Brücke eine MAC-Adresse (Medium Access Control) auf der Basis der Bluetooth^{™}-Adresse nutzt, die in der Kopfzeile der Mitteilungen der Schicht BNEP von Bluetooth^{™} (Bluetooth Network Encapsulation Protocol) enthalten ist.

20. Vorrichtung nach Anspruch 17, **dadurch gekennzeichnet, dass** die Funktion der Aktivierung der Verbindung mit dem GSM/GPRS-Netz, um die Verbindung mit dem GSM/GPRS-Netz zu aktivieren und zu deaktivieren, einen Prozessor von "AT-Kommandos" aufweist, die an das GSM/GPRS-Modem gesendet werden, die es auch ermöglichen, verschiedene Parameter dieser Verbindung zu konfigurieren.

21. Vorrichtung nach Anspruch 20, **dadurch gekennzeichnet, dass** die Funktion der Aktivierung einer GSM/GPRS-Verbindung, die von der Vorrichtung (5) zur Verbindung des Mobilnetzes mit dem lokalen Netzwerk überwacht wird, gemäß drei Modalitäten ausgelöst wird:
. automatisch von einem der Endgeräte beim Zugriff auf einen fernen Dienst;
. auf Anforderung eines der Zugriffs-Endgeräte;
. bei der Initialisierung der Vorrichtung zur Verbindung des lokalen Kommunikationsnetzwerks mit dem Mobilnetz, um die Verbindung bis zu ihrer Unterbrechung oder ihrer Reinitialisierung aktiv zu halten.

22. Vorrichtung nach Anspruch 17, **dadurch gekennzeichnet, dass** die Funktion der dynamischen Zuweisung von Internetanschluss-IP-Adressen dynamisch von einem Server DHCP durchgeführt wird, der in der Vorrichtung zur Verbindung des lokalen Netzwerks mit dem Mobilnetz untergebracht ist.

23. Vorrichtung nach Anspruch 17, **dadurch gekennzeichnet, dass** die Funktion der statischen Zuweisung von Internetanschluss-IP-Adressen statisch von einer Kommandozeile durchgeführt wird, die manuell auf einer Benutzerschnittstelle-Konsole eingegeben wird, die je nach den Ausführungsmodi verwaltet werden kann: von mindestens einem der Endgeräte (TP_i), der Vorrichtung (5) zur Verbindung des Mobilnetzes mit dem lokalen Netzwerk oder von der Vorrichtung (6) zur Verbindung mit dem GSM/GPRS-Netz.

24. Vorrichtung nach Anspruch 16, **dadurch gekennzeichnet, dass** die Vorrichtung (5) zur Verbindung des Mobilnetzes mit dem lokalen Netzwerk einen Daemon PANd (9) besitzt, um eine virtuelle Kommunikationsnetzschnittstelle (11) vom Typ Ethernet mit einem Kunden (c1.0 bis cl.i) zu erzeugen.

25. Vorrichtung nach Anspruch 24, **dadurch gekennzeichnet, dass** das Ethernet-Routing von einer Ethernet-Brücke (11) wie einer Brücke "802.1d Ethernet Bridging" durchgeführt wird, die im Kern Linux 2.4.x enthalten ist, initialisiert in der Vorrichtung (5) zur Verbindung des Mobilnetzes mit dem lokalen Kommunikationsnetzwerk, die als Zugriffspunkt NAP dient, um eine neue virtuelle Schnittstelle pan0 zu erzeugen, die die Schnittstellen bnepX kombiniert, die für jeden verbundenen Kunden erzeugt werden.

26. Vorrichtung nach Anspruch 24, **dadurch gekennzeichnet, dass** die IP-Routingfunktion die Zuordnung einer IP-Adresse zu jeder virtuellen Ethernet-Schnittstelle durchführt, wobei die Adresse entweder durch einen automatischen Mechanismus wie ein Mechanismus DHCP, oder statisch zugeteilt wird, so dass, wenn die IP-Adressen zugewiesen sind, die Vorrichtung (5) zur Verbindung des Mobilnetzes mit dem lokalen Kommunikationsnetzwerk zum Gateway des lokalen Netzwerks (3) wird, was ihr die Möglichkeit gibt, die IP-Pakete zum gewünschten Ziel innerhalb des lokalen Netzwerks (3) oder nach außen zu routen.

27. Vorrichtung nach Anspruch 26, **dadurch gekennzeichnet, dass** zur Verbindung der Kunden mit einem externen Netz die Vorrichtung (5) zur Verbindung des Mobilnetzes mit dem lokalen Kommunikationsnetzwerk eine neue Kommunikationsschnittstelle vom Typ PPPO/GPRS aufbaut, um nur eine Entität im externen Netz erscheinen zu lassen und die Kunden zu schützen.

28. Vorrichtung nach Anspruch 10, **dadurch gekennzeichnet, dass** die Vorrichtung (6) zur Verbindung mit dem GSM/GPRS-Netz, um die Verbindung zwischen der Vorrichtung (5) zur Verbindung des Mobilnetzes mit dem lokalen Netzwerk und dem Modem (7) zu gewährleisten, nur die Datenübertragung zwischen diesen zwei Elementen gewährleistet.
